# EUROPÄISCHE PATENTSCHRIFT

(11) **EP 2 689 946 B1**
(45) Veröffentlichungstag und Bekanntmachung des Hinweises auf die Patenterteilung: **05.09.2018**
(21) Anmeldenummer: 12290256.2
(22) Anmeldetag: 24.07.2012
(51) Int. Cl.: B60H 1/22, H05B 6/10, F24H 1/12

(54) **Heizvorrichtung**
Heating device
Dispositif de chauffage

(43) Veröffentlichungstag der Anmeldung: 29.01.2014
(73) Patentinhaber: MAHLE Behr GmbH & Co. KG, 70469 Stuttgart (DE); Mahle Behr France Rouffach S.A.S., 68250 Rouffach (FR); Behr-Hella Thermocontrol GmbH, 59557 Lippstadt (DE)
(72) Erfinder: Kohl, Michael, 74321 Bietigheim-Bissingen (DE); Krumbach, Karl-Gerd, 71576 Burgstetten (DE); Lochmahr, Karl, 71665 Vaihingen/Enz (DE); Seewald, Wolfgang, 71732 Tamm (DE); Schunck, Olivier, 67220 Thanville (FR); Nagel, Dirk, 33102 Paderborn (DE); Heeper, Lars, 33102 Paderborn (DE); Stallein, Matthias, 33397 Rietberg (DE); Steinkamp, Michael, 59558 Lippstadt (DE); Marquas, Karsten, 59757 Arnsberg (Vosswinkel) (DE); Dicke, Volker, 59909 Bestwig-Heringhausen (DE)
(74) Vertreter: Grauel, Andreas

(56) Entgegenhaltungen:
- EP-A1- 0 075 811
- WO-A1-2008/007819
- WO-A1-2009/050631
- GB-A- 787 125
- JP-A- 9 289 076
- JP-A- 2001 241 769
- US-A- 1 818 953
- US-A- 2 407 562
- US-A1- 2001 017 296

## Beschreibung

### Technisches Gebiet

Die Erfindung betrifft eine Heizvorrichtung, insbesondere für Kraftfahrzeuge.

### Stand der Technik

Heizvorrichtungen sind im Stand der Technik bekannt. So gibt es luftseitige Heizvorrichtungen, die sogenannte PTC-Heizelemente aufweisen, die elektrisch bestromt werden und sich dadurch erwärmen. Über luftseitige Lamellen, die mit den PTC-Elementen in Kontakt sind, wird die Wärme auf die durchströmende Luft übertragen. Diese Heizvorrichtungen weisen jedoch einen grundsätzlich anderen Aufbau auf, als für flüssige Medien notwendig.

Heizvorrichtungen für flüssige Medien sind mit einem geschlossenen Gehäuse versehen, die mit einem Fluidkanal ausgebildet sind mit einen Fluideinlass und einen Fluidauslass, wobei in das Gehäuse ein Heizelement ragt, das mit einem PTC-Element beheizt wird.

Diese Heizvorrichtung für flüssige Medien weisen den Nachteil auf, dass die Wärme in einem anderen Bereich erzeugt wird, als in dem Fluidkanal, durch welches das flüssige Medium strömt, das erwärmt werden soll. Dadurch wird aufgrund der vorhandenen Übergangswiderstände eine verzögerte Erwärmung erreicht, die als nachteilig zu erachten ist.

Die US 2 407 562 offenbart eine Heizvorrichtung gemäß dem Oberbegriff von Anspruch 1.

### Darstellung der Erfindung, Aufgabe, Lösung, Vorteile

Es ist die Aufgabe der Erfindung, eine Heizvorrichtung zu schaffen, die gegenüber dem Stand der Technik verbessert ist und eine unmittelbare Erwärmung des durchströmenden Fluids erreicht.

Dies wird mit den Merkmalen von Anspruch 1 erreicht.

Ein Ausführungsbeispiel sieht eine Heizvorrichtung mit einem Gehäuse mit einem darin angeordneten Fluidkanal mit einem Fluideinlass und einem Fluidauslass, wobei in dem Gehäuse ein ein magnetisches Wechselfeld erzeugendes Element vorgesehen ist, das durch zumindest eine Wandung von dem Fluidkanal abgedichtet abgeteilt ist, wobei weiterhin zumindest ein metallisches Flächenheizelement vorgesehen ist, welches durch das magnetische Wechselfeld aufheizbar ist, wobei das zumindest eine Flächenheizelement im Fluidkanal angeordnet ist. Dadurch ist das das magnetische Wechselfeld erzeugende Element außerhalb des Fluidkanals und der Fluidströmung durch den Fluidkanal, wobei das Flächenheizelement im Fluidkanal und somit in der Fluidströmung angeordnet ist. Dadurch wird bevorzugt eine Trennung des elektrischen Systems, nämlich zwischen dem das magnetische Wechselfeld erzeugenden Element außerhalb des Fluidkanals und dem sich erwärmenden Flächenheizelement in dem Fluidkanal erreicht.

Erfindungsgemäß ist das Flächenheizelement beidseitig von einem Fluid beströmbar. Das Flächenheizelement steht bevorzugt in direktem Kontakt mit dem durch den Fluidkanal durchströmenden Fluid. Dadurch wird eine gute und schnelle Erwärmung des Fluids erreicht.

Auch ist es zweckmäßig, wenn das Flächenheizelement beidseitig von einem Fluid beströmbar ist, wobei die Strömungsrichtung des Fluids auf der einen Seite des Flächenheizelements gleich oder entgegengesetzt der Strömungsrichtung auf der anderen Seite des Flächenheizelements ist. Dadurch wird das Fluid seriell erst an der einen Seite und danach an der anderen Seite des Flächenheizelements vorbei geführt. Dies steigert die Effektivität der Erwärmung,

Erfindungsgemäß ist das ein magnetisches Wechselfeld erzeugendes Element ein hohlzylindrisches Element.

Auch ist es vorteilhaft, wenn ein Flächenheizelement ein im Wesentlichen hohlzylindrisches Element ist.

Erfindungsgemäß ist ein das magnetische Wechselfeld erzeugendes Element ein hohlzylindrisches Element, wobei zumindest ein Flächenheizelement radial innerhalb und außerhalb des hohlzylindrischen das magnetische Wechselfeld erzeugenden Elements angeordnet ist. Dadurch wird eine bauraumgünstige Heizvorrichtung erzeugt.

Auch ist es vorteilhaft, wenn radial innerhalb und außerhalb des hohlzylindrischen das magnetische Wechselfeld erzeugenden Elements ein oder mehrere hohlzylindrische Flächenheizelemente angeordnet sind. Auch dadurch kann die Wärmeleistung erhöht werden.

Auch ist es vorteilhaft, wenn ein das magnetische Wechselfeld erzeugendes Element eine im Wesentlichen hohlzylindrische Spule ist.

Auch ist es vorteilhaft, wenn eine Steuereinheit zur Steuerung des ein magnetisches Wechselfeld erzeugenden Elements vorgesehen ist.

Dabei ist es vorteilhaft, wenn die Steuereinheit mit dem Gehäuse verbunden oder in dieses integriert ist.

Auch ist es vorteilhaft, wenn das Gehäuse aus einem magnetfeldabsorbierenden oder aus einem für magnetische Wechselfelder intransparenten Material besteht.

Dabei ist es auch vorteilhaft, wenn die Wandung aus einem im Wesentlichen magnetfeldtransparenten Material besteht.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1: eine schematische Ansicht eines in einer Wandung aufgenommenen elektrischen Heizelements,
- Fig. 2: eine schematische Ansicht eines in einer Wandung aufgenommenen elektrischen Heizelements,
- Fig. 3: eine Schnittansicht einer Heizvorrichtung,
- Fig. 4: eine Ansicht von Elementen der Heizvorrichtung,
- Fig. 5: eine Ansicht von Elementen der Heizvorrichtung,
- Fig. 6: eine Ansicht von Elementen der Heizvorrichtung,
- Fig. 7: eine Ansicht von Elementen der Heizvorrichtung,
- Fig. 8: eine Ansicht der Heizvorrichtung,
- Fig. 9: eine perspektivische geschnittene Ansicht einer weiteren nicht erfindungsgemäßen Ausgestaltung einer Heizvorrichtung,
- Fig. 10: eine Ansicht von Details der Heizvorrichtung gemäß Figur 9, und
- Fig. 11: eine Ansicht eines Schnitts durch die Heizvorrichtung gemäß Figur 9.

### Bevorzugte Ausführung der Erfindung

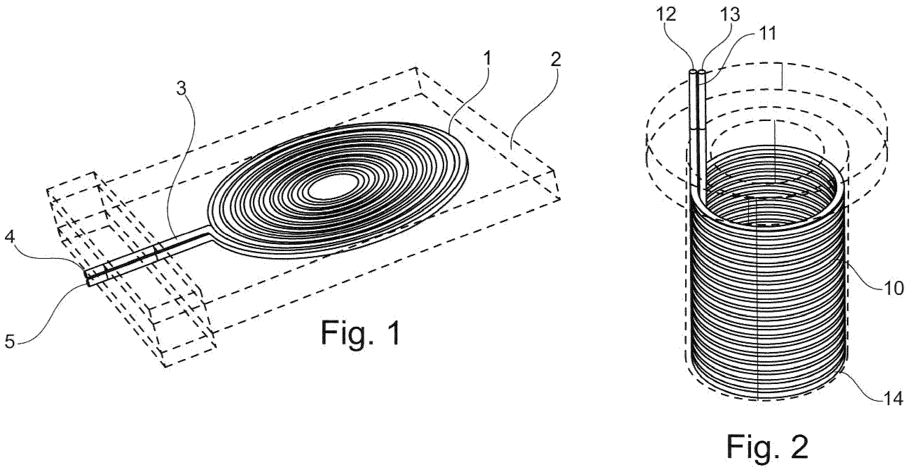

Die Figur 1 zeigt ein ein nicht erfindungsgemäßes, ein magnetisches Wechselfeld erzeugendes Element 1, welches von einer umgebenden Wandung 2 umgeben ist und so nach außen abgedichtet und elektrisch isoliert aufgenommen ist. Die Wandung 2 ist bevorzugt ein abgeschlossenes Gehäuse, das in einen Fluidkanal eingesetzt werden kann, so dass das ein magnetisches Wechselfeld erzeugende Element 1 elektrisch von dem Fluidkanal und von dem Fluid, weiches den Fluidkanal durchströmt getrennt ist. Das ein magnetisches Wechselfeld erzeugende Element 1 ist als Spule ausgebildet, die im Wesentlichen flach und kreisförmig ausgebildet ist. Die Spule ist aus einer mehradrigen Litze 3 gewickelt, die bevorzugt doppellagig gewickelt ausgebildet ist, so dass die beiden Anschlussleitungen 4, 5 der Litze 3 parallel zueinander verlaufen. Bevorzugt ist das als Spule ausgebildete Element zur Erzeugung eines magnetischen Wechselfelds in der Wandung 2 eingegossen. Dadurch wird eine lagestabile Anordnung der Spule in der Wandung erzeugt werden, weil die Spule sich innerhalb der Wandung nicht bewegen kann. Die Darstellung gemäß Figur 1 ist nicht erfindungsgemäß.

Die Figur 2 zeigt ein weiteres nicht erfindungsgemäßes Ausführungsbeispiel eines Elements 10, welches ein magnetisches Wechselfeld erzeugen kann. Das Element 10 ist als Spule ausgebildet, die hohlzylindrisch ausgebildet ist. Dabei ist die Spule 10 durch eine gewickelte Litze 11 gebildet, die doppellagig geführt ist, so dass die Anschlüsse 12 und 13 im Wesentlichen parallel zueinander geführt sind. Auch ist die Litze vorteilhaft mehradrig ausgeführt.

Das Element 10 ist in einer Wandung 14 aufgenommen, die als doppelwandiger Hohlzylinder ausgebildet ist, wobei die Wandung 14 das Element 10 vollständig umgibt und abdichtet. Bevorzugt ist das Element 10 innerhalb der Wandung 14 eingegossen. Die Darstellung gemäß Figur 2 ist nicht erfindungsgemäß.

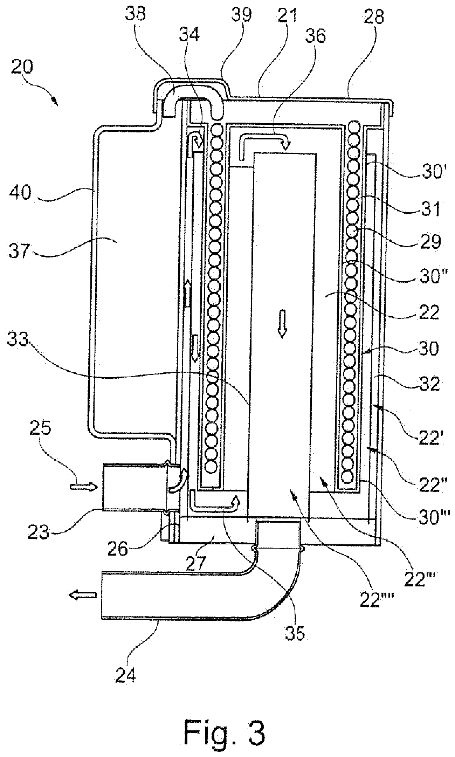

Die Figur 3 zeigt ein Ausführungsbeispiel einer Heizvorrichtung 20 mit einem Gehäuse 21 und einem darin angeordneten Fluidkanal 22. Der Fluidkanal 22 weist einen Fluideinlass 23 und einen Fluidauslass 24 auf, so dass ein Fluid gemäß Pfeil 25 in den Fluideinlass 23 einströmen kann, durch den Fluidkanal 22 durchströmen kann und am Fluidauslass 24 das 21 Gehäuse wieder verlassen kann.

Das Gehäuse 21 ist im Wesentlichen zylindrisch ausgebildet, wobei der Fluideinlass 23 an einer Zylinderwandung 26 angeordnet ist. Der Fluidauslass 24 ist an einer Bodenwandung 27 des Zylinders des Gehäuses 21 angeordnet. Bevorzugt ist der Fluideinlass am unteren Ende des zylindrischen Gehäuses 21 angeordnet. Der Fluidauslass 24 ist bevorzugt mittig der Bodenwandung 27 angeordnet.

Das Gehäuse 21 wird somit zumindest durch einen zylindrischen Mantel mit einer Zylinderwandung 26 und einer unteren Bodenwandung 27 und einen oberen Deckel 28 gebildet, wobei das Gehäuse auch weitere Elemente umfassen kann.

In das zylindrische Gehäuse 21 ist ein ein magnetisches Wechselfeld erzeugendes Element 29 als hohlzylindrische Spule aufgenommen.

Die Spule als ein magnetisches Wechselfeld erzeugendes Element 29 ist innerhalb einer Wandung 30 angeordnet, die das Element 29 im Wesentlichen vollständig umgibt. Dabei weist die Wandung 30 einen radial äußeren Wandbereich 30' und einen radial inneren Wandbereich 30" auf, die oben von dem Gehäusedeckel 28 abgeschlossen sind und die im unteren Bereich von einem Wandbereich 30''' geschlossen sind. Der Wandbereich 30''' ist dabei ein ringförmiger Wandbereich.

Die Wandung 30 umgibt somit die Spule als ein magnetisches Wechselfeld erzeugendes Element 29 im Wesentlichen vollständig. Dabei kann das Element 29 zusätzlich innerhalb der Wandung 30 durch ein Vergußmittel 31 eingegossen und damit formstabil aufgenommen werden. Das Vergußmittel wird in die Freiräume zwischen der Spule als magnetisches Wechselfeld erzeugendes Element 29 und der Wandung 30 eingebracht.

Weiterhin sind in dem Gehäuse 21 zwei Flächenheizelemente 32, 33 vorgesehen, die als hohlzylindrische flächige Elemente ausgebildet sind. Die Flächenheizelemente 32, 33 sind bevorzugt aus Metall ausgebildet, so dass sie sich durch in der Wandstärke der hohlzylindrischen Elemente entstehende Kreisströme erwärmen. Die Kreisströme werden aufgrund des magnetischen Wechselfeldes in den hohlzylindrischen Elementen 32, 33 als Flächenheizelemente induziert. Die Flächenheizelemente sind bevorzugt als dünne Bleche ausgebildet. Dabei ist die Wandstärke etwa im Bereich von 0,08 bis 0,5 mm stark.

Das Flächenheizelement 32 weist eine hohlzylindrische Gestalt auf, mit einem Radius, der größer ist als der Außenradius des Elements 29 beziehungsweise des Außenradius der Wandung 30.

Das Flächenheizelement 33 ist hohlzylindrisch ausgebildet, mit einem Radius, der kleiner ist als der Innenradius des Elements 29 beziehungsweise des Innenradius der Wandung 30, so dass das Flächenheizelement 33 radial innerhalb des Elements 29 angeordnet ist.

Weiterhin ist das Flächenheizelement 32 so dimensioniert, dass sein Radius kleiner ist als der Radius des hohlzylindrischen Gehäuses 21. Das Flächenheizelement 32 ist zwischen der Wandung 30 und dem Gehäuse 21 aufgenommen.

Dadurch entsteht innerhalb des Gehäuses ein mehrflutiger Fluidkanal 22 zur Durchströmung des Fluids. Der Fluidkanal 22 wird gebildet durch die Fluidkanäle 22', 22", 22''', 22"", die von außen nach innen als ringförmige Flutkanäle ausgebildet sind. Das Fluid 25 strömt durch den Fluideinlass 23 in das Gehäuse 21 ein. Es strömt in dem Fluidkanal 22' unten im Gehäuse ein und strömt entlang des Flächenheizelements 32 axial nach oben in Richtung Deckel 28. In der Nähe des Deckels wird das Fluid gemäß Pfeil 34 umgelenkt und strömt durch den Fluidkanal 22" entlang des Flächenheizelements 33 in axialer Richtung nach unten hin zum Boden 27. Das Fluid wird dort gemäß Pfeil 35 wiederum umgelenkt und strömt entlang des Fluidkanals 22''' in axialer Richtung wieder nach oben Richtung Deckel 28. Es wird dort gemäß Pfeil 36 wiederum umgelenkt und strömt durch den Fluidkanal 22'''' wiederum nach unten in Richtung auf den Boden zum Fluidauslass 24.

Das Fluid strömt somit entlang der Fluidkanäle 22' und 22" zweimal entlang des Flächenheizelements 32 und entlang der Fluidkanäle 22''' und 22'''' zweimal entlang des Flächenheizelements 33. Anschließend verlässt das Fluid die Heizvorrichtung und strömt aus dem Fluidauslass 24.

Benachbart des Gehäuses 21 und der Wandung 26 ist eine Steuereinrichtung 37 angeordnet, die das ein magnetisches Wechselfeld erzeugende Element 29 ansteuert. Dazu sind die Anschlussleitungen 38 des Elements 29 in die Steuereinheit 37 geführt. Dazu weist der Deckel 28 eine Ausnehmung oder Auswölbung 39 auf, um die Anschlussleitung 38 aus dem Bereich der Wandung 30 in das Gehäuse 40 der Steuereinheit 37 überführen zu können.

Es ist zu erkennen, dass der Abstand zwischen der Wandung 30' und dem Flächenheizelement 32 kleiner ist als der Abstand zwischen der Wandung 30" und dem Flächenheizelement 33. Dies ist dadurch begründet, dass aufgrund der unterschiedlichen Abstände aufgrund des magnetischen Wechselfelds in den Flächen der Flächenheizelemente 32 bzw. 33, die ja als hohlzylindrische Elemente ausgebildet sind, eine im Wesentlichen gleiche Energieflächendichte erzeugt wird, so dass die Erwärmung des Fluids durch das Flächenheizelement 32 im Wesentlichen pro Flächeneinheit gleich der Erwärmung des Fluids aufgrund des Flächenheizelements 33 ist.

Bei anderen Gestaltungen der Heizvorrichtung kann von der oben beschriebenen Anordnung der Flächenheizelemente jedoch auch abgewichen werden. Die Abstände zwischen dem jeweiligen Flächenheizelement 32 bzw. 33 und der benachbarten Wandung 30' bzw. 30" des Elements 29 kann variiert werden. Der Abstand zwischen dem Flächenheizelement 33 und der Wandung 30" kann gleich dem Abstand zwischen dem Flächenheizelement 32 und der Wandung 30' sein. Alternativ kann der Abstand zwischen dem Flächenheizelement 33 und der Wandung 30" auch kleiner sein als der Abstand zwischen dem Flächenheizelement 32 und der Wandung 30'.

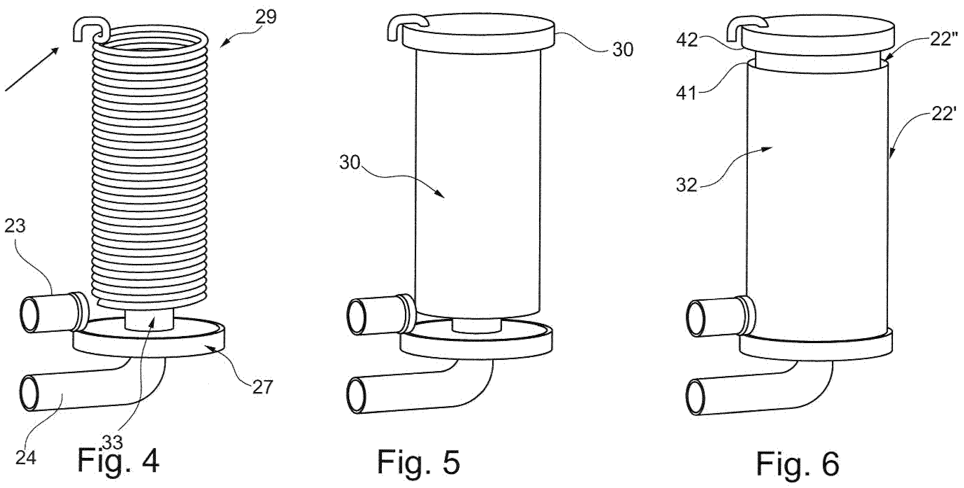

Die Figur 4 zeigt die Anordnung des Elements 29, das im Ausführungsbeispiel der Figur 4 als Spule ausgebildet ist. Dabei kann die Spule doppeltlagig mit einer Metalllitze gewickelt sein, so dass die beiden Anschlussleitungen der Spule parallel zueinander geführt werden können.

Radial innerhalb des als Spule ausgebildeten Elements 29 ist ein Flächenheizelement 33 zu erkennen, dass in den Hohlraum der Spule hineinragt. Dieses Flächenheizelement 33 wird an seinem axial unteren Ende durch den Boden 27 gehalten, an dem auch der Fluidauslass 24 angeordnet ist. Der Fluideinlass 23 ist aus schematischen Gründen dargestellt, der an der äußeren zylindrischen Wandung 26 des Gehäuses 21 angeschlossen ist.

Die Figur 5 zeigt die Gestaltung der Figur 4, wobei weiterhin die Wandung 30 dargestellt ist. Die Wandung 30 umschließt das Element 29 abgedichtet, so dass das ein magnetisches Wechselfeld erzeugende Element 29 vollständig außerhalb des Fluidkanals aber abgedichtet angeordnet werden kann.

Die Figur 6 zeigt ergänzend zur Darstellung der Figur 5, wie das radial äußere Flächenheizelement 32 angeordnet ist. Es umgreift die Wandung 30 und hält einen Abstand zu dieser Wandung 30 zur Bildung des Fluidkanals 22", wobei in axialer Richtung zwischen dem oberen Rand 41 und dem Rand 42 der Wandung 30 ein Abstand vorliegt, der es erlaubt, dass das Fluid von dem Kanal 22' in den Kanal 22" umgelenkt werden kann.

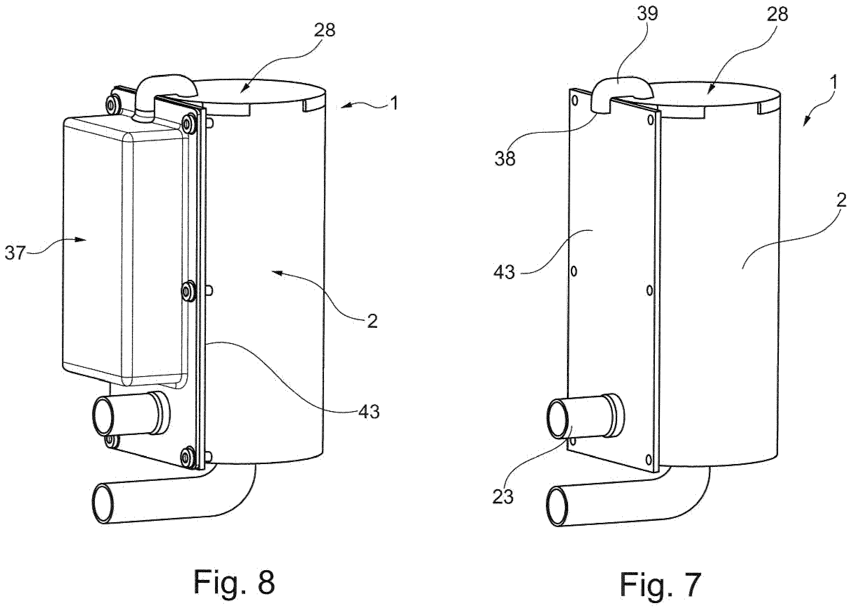

Die Figuren 7 und 8 zeigen die Heizvorrichtung 1 mit dem Gehäuse 2 und dem Abschlussdeckel 28. Auch ist ein seitlicher Flansch 43 vorgesehen, welcher zur Befestigung und Anlage der Steuereinheit 37 dient.

Dabei ist der Flansch 43 entweder als zusätzliches Teil an der Wandung 2 angebracht oder er ist mit der Wandung einteilig ausgebildet. Dazu kann die Wandung mit dem Flansch 43 beispielsweise als extrudiertes Bauteil hergestellt sein.

Der Fluidanschluss 23 ist im Bereich des Flanschs 43 angebracht und dient der Fluidversorgung der Heizvorrichtung. Auch ist der kanalartige Bereich 39 zur Überleitung der Anschlüsse 38 des Elements 29 aus dem Innenraum des Gehäuses zur elektronischen Steuereinheit 37 zu erkennen. Er ist kanalartig ausgebildet und verbindet den Innenraum des Gehäuses über den Deckel 28 mit der Steuereinheit 37. Dabei ist die elektronische Steuereinheit 37 auf den Flansch 43 aufgesetzt und mit diesem wärmeleitend verbunden. Dadurch kann eine in der Steuereinheit 37 vorhandene Leistungselektronik durch das Fluid gekühlt werden, das durch die Heizvorrichtung strömt.

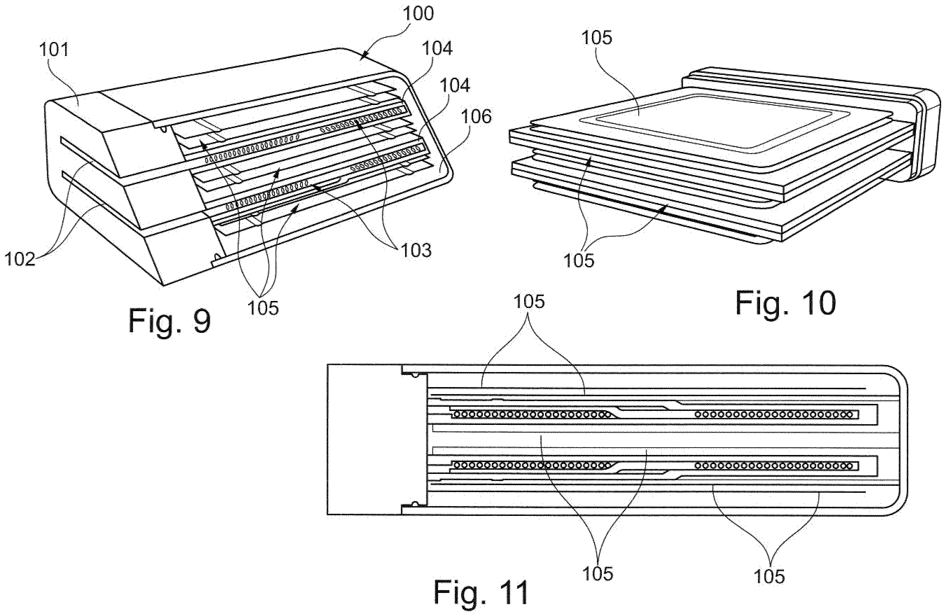

Die Figuren 9 bis 11 zeigen ein weiteres nicht erfindungsgemäßes Beispiel, bei welchem sowohl das ein magnetisches Wechselfeld erzeugende Element als auch die Flächenheizelemente nicht hohlzylindrisch ausgebildet sind, sondern als im Wesentlichen flächige, flache und ebene Elemente ausgebildet sind.

Das nicht erfindungsgemäße Beispiel der Figuren 9 bis 11 zeigt ein Gehäuse 100, das mit einem Gehäuseflansch 101 verbunden ist. Der Gehäuseflansch dient der Durchführungen 102 der Halterung und der elektrischen Kontaktierung des Elements, das ein magnetisches Wechselfeld erzeugt. In dem Gehäuse 100 sind zwei magnetische Wechselfeld erzeugende Elemente 103 angeordnet, die beiderseitig mit einer Wandung 104 umgeben sind, so dass die Elemente 103 abgedichtet und vom Fluidkanal abgeteilt sind.

Parallel und beabstandet zu den flächenartigen magnetfelderzeugenden Elementen 103 und zu den flächenartigen Wandungen 104 sind Flächenheizelemente 105 angeordnet. Vorteilhaft sind auf einer Seite eines magnetfelderzeugenden Elements jeweils zwei Flächenheizelemente 105 parallel und beabstandet voneinander angeordnet. Alternativ kann auch nur ein Flächenheizelement 105 auf einer Seite des Elements 103 angeordnet sein. Diese Flächenheizelemente 105 sind von den Wandungen 104 beabstandet angeordnet, dass sowohl zwischen den beiden Flächenheizelementen 105 als auch zwischen einem Flächenheizelement 105 und einer Wandung 104 ein Fluidstrom durch den Fluidkanal 106 strömen kann, um von den Flächenheizelementen 105 aufgewärmt werden zu können.

Im Beispiel der nicht erfindungsgemäßen Figuren 9 bis 11 ist zu erkennen, dass zwei Flächenheizelemente 105 jeweils parallel zueinander angeordnet sind. Dadurch ist eine alternative Gestaltung zum Beispiel der Figuren 3 bis 8 gezeigt, in welchen beiderseits der Spule nur ein Flächenheizelement angeordnet ist. Im Ausführungsbeispiel der Figuren 3 bis 8 könnten alternativ auch mehrere parallel angeordnete Flächenheizelemente auf jeder Seite der Spule vorgesehen sein, die der Erwärmung des durchströmenden Fluids dienen.

Hinsichtlich der verwendeten Materialien ist die Wandung 30 bzw. 104 zur Aufnahme und Abdichtung des spulenartigen Elements zur Erzeugung eines magnetischen Wechselfeldes bevorzugt aus einem Kunststoffmaterial hergestellt, das magnetfeldtransparent ist. Dadurch wird das erzeugte magnetische Wechselfeld nicht durch die Wandung 30 bzw. 104 negativ beeinträchtigt.

Die Gehäusewandung 100 bzw. 2 ist hingegen aus einem magnetfeldintransparenten Material, so dass bevorzugt das innerhalb des Gehäuses erzeugte Magnetfeld nicht nach außen aus dem Gehäuse 2 dringt, sondern von dem Gehäuse 2 abgeschirmt wird. Hierzu sind beispielsweise metallische Materialien geeignet, wie beispielsweise Aluminium. Dieses Material hat den Vorteil, dass ein magnetisches Wechselfeld im Bereich des Gehäuses ebenso Kreisströme in diesem Material erzeugt und damit die Wandung des Gehäuses selbst erwärmt, so dass selbst das Gehäuse noch eine Wirkung als Heizelement aufweisen kann.

Das ein magnetisches Wechselfeld erzeugende Element ist bevorzugt aus einer Hochfrequenzlitze gewickelt, die eine mehradrige Litze ist. So kann einfach und günstig eine flache oder hohlzylindrische Spule gewickelt werden. Dabei ist es vorteilhaft, wenn die Spule in einem elektrisch nichtleitenden Material, wie ein Kunststoffgehäuse, aufgenommen oder eingebettet oder vergossen ist. Dabei kann die Spule einfach oder doppeladrig gewickelt sein.

Die Spule zur Erzeugung des magnetischen Wechselfelds als Element zur Erzeugung eines magnetischen Wechselfelds ist zusammen mit einem Kondensator innerhalb einer Steuerelektronik in einen Schwingkreis eingebunden, der von Schalttransistoren angesteuert beziehungsweise angetrieben wird. Die Steuerelektronik ist bevorzugt in die Steuereinheit integriert. Die Frequenz des Schwingkreises liegt dabei bei ca. 10 bis 80 kHz.

Aufgrund des Materials der Flächenheizelemente werden aufgrund des magnetischen Wechselfelds in den Flächenheizelementen Wirbelströme induziert, die zu einer Erwärmung der Flächenheizelemente führen. Werden diese von einem Fluid umströmt, so führt dies zu einer Erwärmung des Fluids.

Als Material für die Flächenheizelemente werden gut leitende metallische Materialien bevorzugt, wie Kupfer, Stahl oder eisenhaltige Werkstoffe. Die Materialdicke ist bevorzugt zwischen 0,08 und 0,5 mm.

## Patentansprüche

1. Heizvorrichtung (20) mit einem Gehäuse (21) mit einem darin angeordneten Fluidkanal (22, 22', 22", 22''', 22'''') mit einem Fluideinlass (23) und einem Fluidauslass (24), wobei in dem Gehäuse (21) ein ein magnetisches Wechselfeld erzeugendes Element (29) vorgesehen ist, das durch zumindest eine Wandung (30, 30', 30") von dem Fluidkanal (22, 22', 22", 22''', 22'''') abgedichtet abgeteilt ist, wobei weiterhin zumindest zwei metallische Flächenheizelemente (32, 33) vorgesehen sind, welche durch das magnetische Wechselfeld aufheizbar sind, wobei die zumindest zwei Flächenheizelemente (32, 33) im Fluidkanal angeordnet sind, wobei das ein magnetisches Wechselfeld erzeugende Element (29) ein hohlzylindrisches Element ist, wobei zumindest ein Flächenheizelement (32, 33) radial innerhalb und ein Flächenheizelement (32, 33) radial außerhalb des hohlzylindrischen das magnetische Wechselfeld erzeugenden Elements (29) angeordnet ist, **dadurch gekennzeichnet, dass** das jeweilige Flächenheizelement (32, 33) beidseitig von einem Fluid beströmbar ist.

2. Heizvorrichtung (20) nach Anspruch 1, **dadurch gekennzeichnet, dass** die Strömungsrichtung des Fluids auf der einen Seite des Flächenheizelements (32, 33) gleich oder entgegengesetzt der Strömungsrichtung auf der anderen Seite des Flächenheizelements (32, 33) ist.

3. Heizvorrichtung (20) nach Anspruch 1 oder 2, **dadurch gekennzeichnet, dass** das Flächenheizelement (32, 33) ein im Wesentlichen hohlzylindrisches Element ist.

4. Heizvorrichtung (20) nach einem der vorhergehenden Ansprüche, **dadurch gekennzeichnet, dass** radial innerhalb und außerhalb des hohlzylindrischen ein magnetisches Wechselfeld erzeugendes Element (29) mehrere hohlzylindrische Flächenheizelemente (32, 33) angeordnet sind.

5. Heizvorrichtung (20) nach einem der vorhergehenden Ansprüche, **dadurch gekennzeichnet, dass** das ein magnetisches Wechselfeld erzeugende Element (29) eine im Wesentlichen hohlzylindrische Spule (10) ist.

6. Heizvorrichtung (20) nach einem der vorhergehenden Ansprüche, **dadurch gekennzeichnet, dass** eine Steuereinheit (37) zur Steuerung des ein magnetisches Wechselfeld erzeugenden Elements (29) vorgesehen ist.

7. Heizvorrichtung (20) nach Anspruch 6, **dadurch gekennzeichnet, dass** die Steuereinheit (37) mit dem Gehäuse (21) verbunden oder in dieses integriert ist.

8. Heizvorrichtung (20) nach einem der vorhergehenden Ansprüche, **dadurch gekennzeichnet, dass** das Gehäuse (21) aus einem magnetfeldabsorbierenden oder für magnetische Wechselfelder intransparenten Material besteht.

9. Heizvorrichtung (20) nach zumindest einem der vorhergehenden Ansprüche, **dadurch gekennzeichnet, dass** die Wandung (30, 30', 30") aus einem magnetfeldtransparenten Material besteht.

## Claims

1. A heating device (20) having a housing (21) with a fluid duct (22, 22', 22", 22''', 22'''') which is arranged therein and which has a fluid inlet (23) and a fluid outlet (24), wherein, in the housing (21), there is provided an element (29) which generates an alternating magnetic field and which is separated from the fluid duct (22, 22', 22", 22''', 22'''') in a sealed manner by at least one wall (30, 30', 30"), wherein further at least two metallic areal heating elements (32, 33) are provided which can be heated by the alternating magnetic field, wherein the at least two areal heating elements (32, 33) are arranged in the fluid duct, wherein the element (29) which generates an alternating magnetic field is a hollow cylindrical element, wherein at least one areal heating element (32, 33) is arranged radially inside and one areal heating element (32, 33) is arranged radially outside the hollow cylindrical element (29) which generates the alternating magnetic field, **characterised in that** a fluid can flow over the respective areal heating element (32, 33) at both sides.

2. The heating device (20) according to claim 1, **characterised in that** the flow direction of the fluid on the one side of the areal heating element (32, 33) is the same as or opposite to the flow direction on the other side of the areal heating element (32, 33).

3. The heating device (20) according to claim 1 or 2, **characterised in that** the areal heating element (32, 33) is a substantially hollow cylindrical element.

4. The heating device (20) according to one of the preceding claims, **characterised in that** several hollow cylindrical areal heating elements (32, 33) are arranged radially inside and outside the hollow cylindrical element (29) which generates an alternating magnetic field.

5. The heating device (20) according to one of the preceding claims, **characterised in that** the element (29) which generates an alternating magnetic field is a substantially hollow cylindrical coil (10).

6. The heating device (20) according to one of the preceding claims, **characterised in that** a control unit (37) is provided for controlling the element (29) which generates an alternating magnetic field.

7. The heating device (20) according to claim 6, **characterised in that** the control unit (37) is connected to or integrated into the housing (21).

8. The heating device (20) according to one of the preceding claims, **characterised in that** the housing (21) is composed of a material which absorbs magnetic fields or which is non-transparent to alternating magnetic fields.

9. The heating device (20) according to at least one of the preceding claims, **characterised in that** the wall (30, 30', 30") is composed of a material which is transparent to magnetic fields.

## Revendications

1. Dispositif de chauffage (20) comprenant un boîtier (21) comportant un conduit de fluide (22, 22', 22", 22''', 22'''') disposé à l'intérieur dudit boîtier et ayant une entrée de fluide (23) et une sortie de fluide (24), où il est prévu, dans le boîtier (21), un élément (29) produisant un champ alternatif magnétique, lequel élément est subdivisé, par au moins une paroi (30, 30', 30"), de façon étanche par rapport au conduit de fluide (22, 22', 22", 22''', 22'''') , où il est prévu en outre au moins deux éléments chauffants de surface métalliques (32, 33) qui peuvent être chauffés par le champ alternatif magnétique, où les éléments chauffants de surface (32, 33) au moins au nombre de deux sont disposés dans le conduit de fluide, où l'élément (29) produisant un champ alternatif magnétique est un élément cylindrique creux, où au moins un élément chauffant de surface (32, 33) est disposé à l'intérieur - dans le sens radial - de l'élément cylindrique creux, et un élément chauffant de surface (32, 33) est disposé à l'extérieur - dans le sens radial - de l'élément (29) cylindrique creux produisant le champ alternatif magnétique, **caractérisé en ce que** l'élément chauffant de surface respectif (32, 33) peut être baigné, des deux côtés, par un fluide.

2. Dispositif de chauffage (20) selon la revendication 1, **caractérisé en ce que** la direction d'écoulement du fluide, sur l'un des côtés de l'élément chauffant de surface (32, 33), est identique ou en sens opposé par rapport à la direction d'écoulement sur l'autre côté de l'élément chauffant de surface (32, 33).

3. Dispositif de chauffage (20) selon la revendication 1 ou 2, **caractérisé en ce que** l'élément chauffant de surface (32, 33) est un élément pratiquement cylindrique creux.

4. Dispositif de chauffage (20) selon l'une quelconque des revendications précédentes, **caractérisé en ce que** plusieurs éléments chauffants de surface cylindriques creux (32, 33) sont disposés à l'intérieur et à l'extérieur - dans le sens radial - de l'élément (29) cylindrique creux produisant un champ alternatif magnétique.

5. Dispositif de chauffage (20) selon l'une quelconque des revendications précédentes, **caractérisé en ce que** l'élément (29) produisant un champ alternatif magnétique est une bobine (10) pratiquement cylindrique creuse.

6. Dispositif de chauffage (20) selon l'une quelconque des revendications précédentes, **caractérisé en ce qu'**il est prévu une unité de commande (37) servant à la commande de l'élément (29) produisant un champ alternatif magnétique.

7. Dispositif de chauffage (20) selon la revendication 6, **caractérisé en ce que** l'unité de commande (37) est assemblée avec le boîtier (21) ou bien intégrée dans ledit boîtier.

8. Dispositif de chauffage (20) selon l'une quelconque des revendications précédentes, **caractérisé en ce que** le boîtier (21) se compose d'un matériau absorbant des champs magnétiques, ou bien d'un matériau non transparent par rapport à des champs alternatifs magnétiques.

9. Dispositif de chauffage (20) selon au moins l'une quelconque des revendications précédentes, **caractérisé en ce que** la paroi (30, 30', 30") se compose d'un matériau transparent par rapport à des champs magnétiques.
